# EUROPEAN PATENT SPECIFICATION

(11) **EP 2 960 689 B1**
(45) Date of publication and mention of the grant of the patent: **16.01.2019**
(21) Application number: 14754171.8
(22) Date of filing: 31.01.2014
(51) Int. Cl.: F24S 25/20, G02B 7/183, F24S 23/70, G02B 5/10

(54) **SUNLIGHT-COLLECTING REFLECTIVE MIRROR**
REFLEKTIERENDER SPIEGEL ZUR SONNENLICHTERFASSUNG
MIROIR RÉFLÉCHISSANT DE COLLECTE DE LUMIÈRE SOLAIRE

(30) Priority: 21.02.2013 JP 2013032325
(43) Date of publication of application: 30.12.2015
(73) Proprietor: FUJIFILM Corporation, Tokyo 106-8620 (JP)
(72) Inventor: UEKI Shiki, Ashigara-kami-gun Kanagawa 258-8577 (JP)
(74) Representative: Hoffmann Eitle
(86) International application number: PCT/JP2014/052244
(87) International publication number: WO 2014/129290

(56) References cited:
- WO-A1-2011/122241
- WO-A1-2012/133517
- WO-A1-2012/133517
- WO-A1-2013/015190
- DE-A1- 3 415 890
- DE-U1-202010 006 792
- GB-A- 987 195
- JP-A- H09 311 207
- JP-A- 2004 077 643
- JP-A- 2004 077 643
- JP-A- 2004 270 552
- JP-A- 2004 270 552
- US-A1- 2004 119 895
- US-A1- 2011 162 637

## Description

### TECHNICAL FIELD

The present invention relates to a reflecting mirror for solar radiation collection that uses a film mirror for collecting solar radiation.

### BACKGROUND ART

Glass mirrors have conventionally been used in solar radiation reflecting devices because they are exposed to ultraviolet rays and heat from solar radiation, wind and rain, dust, and the like.

However, when a glass mirror is used, there are issues associated with possible damage during transportation and with high construction cost since a frame on which the mirror is mounted requires high mechanical strength.

To solve such problems, substituting a resin reflective sheet (film mirror) for the glass mirror has been recently proposed.

For example, JP 3-293301 A describes a "reflecting mirror characterized in that a reflective film, formed by vapor deposition, sputtering, sticking, or the like of a metal thin film having high reflectivity such as Al, Ag, or the like on a plastic film, is mounted on a ring-shaped or disk-shaped member" (see claim (1) and the like), and describes that the ring-shaped member applies tension to the film to secure it under the applied tension (see page 2, lower right section, lines 16 to 20).

Documents cited during prosecution include JP 2004 270552 A, which discloses a solar heat propulsion system and satellite self-disposed method; WO 2012/133517 A1, which discloses a mirror and reflective device for generating solar power; and JP 2004 077643 A, which discloses a reflecting mirror for back projection on TV receivers. US 2011/162637 A1 also discloses a reflecting mirror for solar radiation collection.

### SUMMARY OF INVENTION

### TECHNICAL PROBLEMS

The present inventor studied the reflecting mirror described in JP 3-293301 A and found that the reflecting mirror may exhibit a poor heat resistance (undesirable temperature cycle properties) and considerable film warpage depending on usage environments other than space applications, leading to the degradation in specular reflectivity and light-collecting characteristics.

Therefore, an object of the present invention is to provide a reflecting mirror for solar radiation collection having an excellent heat resistance, involving less warpage of a film mirror, and predominating in specular reflectivity and light-collecting characteristics, accordingly.

### SOLUTION TO PROBLEMS

As a result of diligent research to attain the above object, the present inventor discovered that the reflecting mirror for solar radiation collection that includes a film mirror with a prescribed thickness and a support member having a curved face of a specified radius of curvature in a prescribed position has an excellent heat resistance, involves less warpage of the film mirror, and predominates in specular reflectivity and light-collecting characteristics. The invention has been thus completed.

Specifically, the present invention provides (1) to (7) below.
(1) A reflecting mirror for solar radiation collection, comprising a film mirror and a frame-shaped support member adapted to support a peripheral edge of the film mirror, wherein:
   the film mirror has a film thickness of 0.10 to 0.30 mm;
   the support member is in contact with the film mirror and has a curved face which is convexed outward in a horizontal direction with respect to an opening face of the support member; and
   the curved face has a radius of curvature of between 15 mm and 30 mm.
(2) The reflecting mirror for solar radiation collection according to (1), wherein a ratio of the radius of curvature of the curved face of the support member to the film thickness of the film mirror (radius of curvature/film thickness) is not less than 80.
(3) The reflecting mirror for solar radiation collection according to (1) or (2), wherein an angle formed by a tangent to the support member and the opening face of the support member at a point in a cross section perpendicular to the opening face of the support member, at which point the film mirror and the support member separate from each other, is 0° or larger but up to 20°.
(4) The reflecting mirror for solar radiation collection according to any one of (1) to (3), wherein the film mirror is a polygonal film mirror having a resin substrate, a metallic reflective layer, and a surface covering layer.
(5) The reflecting mirror for solar radiation collection according to any one of (1) to (4), wherein the film mirror has a rectangular shape.
(6) The reflecting mirror for solar radiation collection according to any one of (1) to (5), wherein the film mirror has a first surface covering layer, a first metallic reflective layer, a resin substrate, a second metallic reflective layer and a second surface covering layer in this order.
(7) The reflecting mirror for solar radiation collection according to any one of (1) to (5), wherein the film mirror has a first surface covering layer, a first resin substrate, a metallic reflective layer, a second resin substrate and a second surface covering layer in this order.

### ADVANTAGEOUS EFFECTS OF INVENTION

As will be described below, embodiments of the present invention provide a reflecting mirror for solar radiation collection having a good heat resistance, involving less warpage of a film mirror, and predominating in specular reflectivity and light-collecting characteristics.

### BRIEF DESCRIPTION OF DRAWINGS

In order to better understand the present invention, and to show how the same may be carried into effect, reference will now be made, by way of example only, to the accompanying drawings.
FIG. 1 is an oblique view schematically illustrating an example of a preferred embodiment of the reflecting mirror for solar radiation collection of the present invention from the perspective of its production process.
FIG. 2 is a schematic end view showing the cross section along section line A-A in FIG. 1.
FIG. 3 is a section view schematically illustrating an example of a preferred embodiment (first embodiment) of a film mirror for collecting solar radiation used in the present invention.
FIG. 4 is a section view schematically illustrating another example of the preferred embodiment (first embodiment) of the film mirror for collecting solar radiation used in the present invention.
FIG. 5 is a section view schematically illustrating an example of a preferred embodiment (second embodiment) of the film mirror for collecting solar radiation used in the present invention.
FIG. 6 is a section view schematically illustrating another example of the preferred embodiment (second embodiment) of the film mirror for collecting solar radiation used in the present invention.
FIG. 7(A) is an example of a schematic section view taken along section line B-B in FIG. 1, and FIGS. 7(B) to 7(D) are other examples of schematic section views of a support member.
FIG. 8 is a schematic diagram illustrating a method for evaluating light-collecting characteristics.

### DESCRIPTION OF EMBODIMENTS

### [Reflecting mirror for solar radiation collection]

The reflecting mirror for solar radiation collection of the present invention (abbreviated as "reflecting mirror of the present invention" hereinafter) is a reflecting mirror for solar radiation collection including a film mirror and a frame-shaped support member which supports a peripheral edge of the film mirror, wherein: the film mirror has a film thickness of 0.10 to 0.30 mm; the support member is in contact with the film mirror and has a curved face which is convexed outward in a horizontal direction with respect to an opening face of the support member; and the curved face has a radius of curvature of not less than 8 mm.

Here, the "peripheral edge" of the film mirror refers to the portion supported by the support member (portion coming into contact with the support member). The width of the peripheral edge is not particularly limited because it varies depending on the width of the support member and the length of the end portion of the film mirror that is to be bonded to the support member, but, for example, in the case of a rectangular (square or oblong) film mirror, the width is preferably from about 1/2 to about 1/100 of the length of a side (the long side if oblong) of the film mirror.

The "opening face" of the support member refers to a hypothetical face that constitutes an opening portion surrounded by the frame-shaped support member.

Additionally, "outward in a horizontal direction (with respect to an opening face of the support member)" means "in the direction toward the outside of the frame that constitutes the support member."

In the reflecting mirror of the present invention having such a configuration, the heat resistance is excellent, the warpage of the film mirror is slight, and the specular reflectivity and light-collecting characteristics are good.

The above advantages are based on an absolutely new finding that, during the application of tension to the film mirror using the curved face of the support member, the relationship between the film thickness of the film mirror and the counterforce (i.e., the amount of warpage) of the film mirror also depends on the radius of curvature of the curved face, and the mechanism thereof as surmised by the present inventor is as follows.

Specifically, it is thought that the heat resistance (particularly suppression of deformation over time (of heating)) is made good by the use of a film mirror with a prescribed film thickness, and adhesion between the film mirror with a prescribed film thickness and the support member is improved and the amount of warpage of the film mirror is reduced by applying tension to the film mirror via the support member having a curved face of a specified radius of curvature, and as a result, specular reflectivity and light-collecting characteristics are also made good.

The amount of warpage of the film mirror refers to the distance (µm) between the opening face of the support member and the film mirror at a point where they are farthest from each other. The reflecting mirror of the present invention can keep the amount of warpage of the film mirror less than or equal to 100 µm.

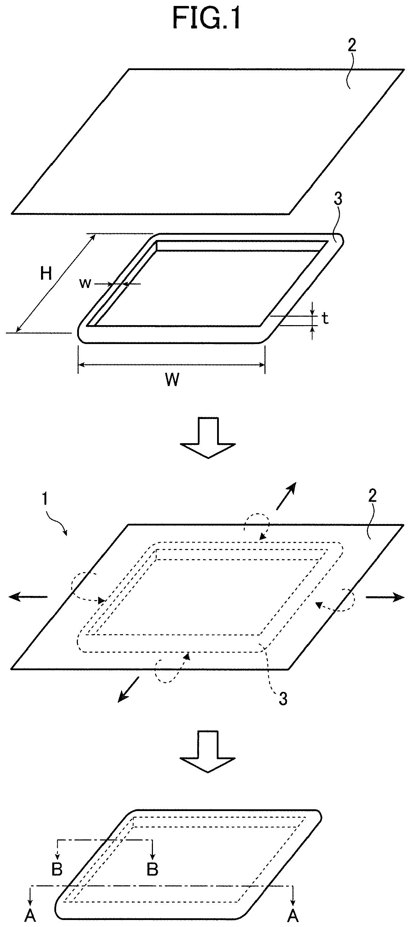

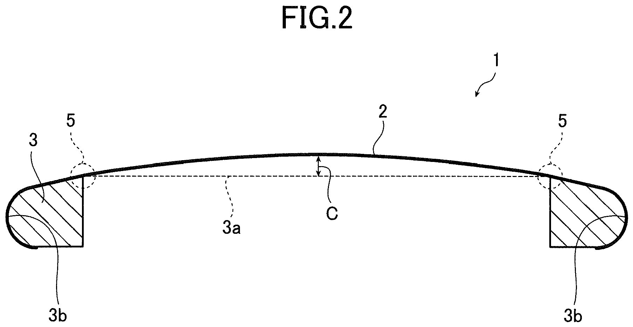

The reflecting mirror of the present invention will be described below using FIGS. 1 and 2, to which the inventive reflecting mirror is not particularly limited.

Here, FIG. 1 is an oblique view schematically illustrating an example of a preferred embodiment of the reflecting mirror for solar radiation collection of the present invention from the perspective of its production process.

FIG. 2 is a schematic end view showing the cross section along section line A-A in FIG. 1.

As illustrated in FIGS. 1 and 2, a reflecting mirror 1 has a film mirror 2 and a frame-shaped support member 3 which supports a peripheral edge of the film mirror 2.

As illustrated in FIG. 2, the support member 3 is in contact with the film mirror 2, and has a curved face 3b convexed outward in a horizontal direction with respect to an opening face 3a of the support member 3.

In FIG. 2, a letter C denotes the amount of warpage (µm) of the film mirror as described above, and a number 5 denotes the point in a cross section perpendicular to the opening face 3a of the support member 3 at which the film mirror 2 and the support member 3 separate from each other (hereafter also referred to as "exit point").

### [Film mirror]

The film mirror to be included in the reflecting mirror of the present invention is not particularly limited in shape or layer configuration provided that its film thickness is 0.10 to 0.30 mm, and any conventional film mirror may be used.

### <Film thickness>

The film thickness of the film mirror is preferably 0.12 to 0.27 mm and more preferably 0.15 to 0.25 mm because tension adjustment of the film mirror is easy when the support member to be described later supports the peripheral edge and also because the specular reflectivity further improves and the weather resistance is better.

### <Shape>

In the present invention, the shape of the film mirror is not particularly limited but may be circular or polygonal. Since it is easier to provide and adjust film mirror tension when the support member to be described later supports the peripheral edge, a polygonal shape is preferred and a rectangular shape is more preferred.

The size of the film mirror is not particularly limited because it can be designed as appropriate according to the shape thereof, the type of a mounting body, and the like. For example, as to the size of a rectangular film mirror (longitudinal width and lateral width), it is preferable from the viewpoint of tension adjustment that the longitudinal width (long side) is 100 to 5000 mm, the lateral width (short side) is 100 to 2000 mm, and the ratio between the longitudinal width and the lateral width (longitudinal width/lateral width) is 1/1 to 15/1.

### <Layer configuration>

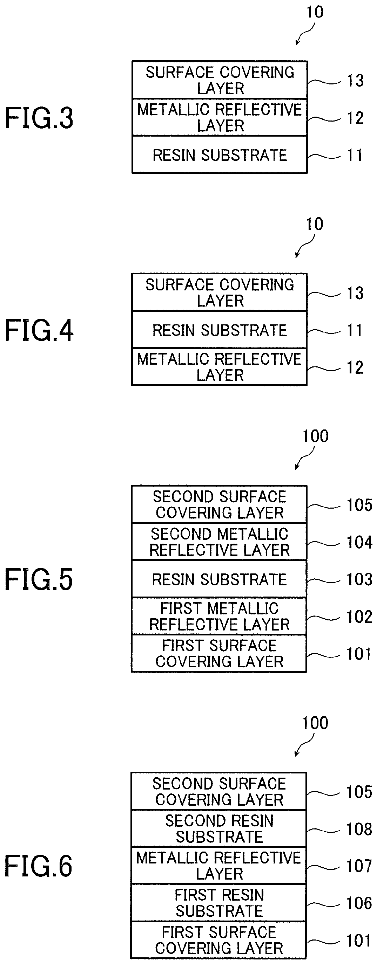

The layer structure of the film mirror will be described in detail below using FIGS. 3 to 6.

Here, FIGS. 3 to 6 are section views schematically illustrating examples of preferred embodiments of the film mirror included in the reflecting mirror of the present invention. The layer structure of the film mirror is not particularly limited to these drawings, and if necessary, a primer layer or an adhesive layer may be provided between adjacent layers, or a back coat layer may be provided at the side facing the mounting body, for example.

### <First embodiment: FIGS. 3 and 4>

Examples of a first embodiment of the film mirror (single side use type) include an embodiment as illustrated in FIG. 3 in which a film mirror 10 has a resin substrate 11, a metallic reflective layer 12, and a surface covering layer 13 in this order from the side to face the mounting body (not illustrated), and an embodiment as illustrated in FIG. 4 in which a film mirror 10 has the metallic reflective layer 12, the resin substrate 11, and the surface covering layer 13 in this order from the side to face the mounting body (not illustrated).

Note that in the embodiment illustrated in FIG. 4, a covering layer which protects the metallic reflective layer may be provided on the surface of the metallic reflective layer 12 that is opposite from the side to face the resin substrate 11.

### <Second embodiment: FIGS. 5 and 6>

Examples of a second embodiment of the film mirror (double side use type) include an embodiment as illustrated in FIG. 5 in which a film mirror 100 has a first surface covering layer 101, a first metallic reflective layer 102, a resin substrate 103, a second metallic reflective layer 104, and a second surface covering layer 105 in this order from the side to face the mounting body (not illustrated), and an embodiment as illustrated in FIG. 6 in which a film mirror 100 has the first surface covering layer 101, a first resin substrate 106, a metallic reflective layer 107, a second resin substrate 108, and the second surface covering layer 105 in this order from the side to face the mounting body (not illustrated).

In the second embodiment as above, a reflecting mirror including the film mirror 2 as shown in FIG. 1, for instance, that has an additional support member provided on its surface opposite to the support member 3 is preferred from the perspective that both faces of the film mirror can be used by reversing the reflecting mirror relative to the mounting body.

### (Resin substrate)

The resin substrate (including the first resin substrate and the second resin substrate; the same applying in the rest) is not particularly limited, and examples of the constituent material thereof include polyolefin resins such as polyethylene and polypropylene; polyester resins such as polyethylene terephthalate and polyethylene naphthalate; polycarbonate resins; acrylic resins such as polymethyl methacrylate; polyamide resins, polyimide resins; polyvinyl chloride resins; polyphenylene sulfide resins; polyether sulfone resins; polyethylene sulfide resins; polyphenylene ether resins; styrene resins; cellulose resins such as cellulose acetate; and so forth. The constituent materials of the first resin substrate and the second resin substrate used in the second embodiment (FIG. 6) may be the same or different materials.

Among these, polyester resins or acrylic resins are preferred from the perspectives of reflectance and weather resistance of the resultant film mirror.

The shape of the resin substrate is not limited to a planar shape, and may be, for example, any of concave, convex and other shapes.

The thickness of the resin substrate is not particularly limited because it varies depending on the shape thereof, but when the resin substrate is planar, a thickness of from 25 to 300 µm is usually preferred.

### (Metallic reflective layer)

The metallic reflective layer (including the first metallic reflective layer and the second metallic reflective layer; the same applying in the rest) is not particularly limited, and examples of the constituent material (metal) thereof include Au, Ag, Cu, Pt, Pd, In, Ga, Sn, Ge, Sb, Pb, Zn, Bi, Fe, Ni, Co, Mn, Tl, Cr, V, Ru, Rh, Ir, Al, and the like. The constituent materials of the first metallic reflective layer and the second metallic reflective layer used in the second embodiment (FIG. 5) may be the same or different materials.

Among these, Ag, Al, Ni, or Cu is preferred and Ag is more preferred from the perspectives of reflectance and weather resistance of the resultant film mirror.

Furthermore, when the metal that constitutes the metallic reflective layer is Ag, the content of Ag in the metallic reflective layer is preferably not less than 30 mol%, more preferably not less than 50 mol%, even more preferably not less than 80 mol%, particularly preferably not less than 95 mol%, and most preferably 100 mol% relative to all metals constituting the metallic reflective layer.

The metallic reflective layer is not particularly limited for shape and may be a layer that covers all or part of the main face of the resin substrate.

The thickness of the metallic reflective layer is not particularly limited, but from the perspectives of reflectance and the like of the film mirror, it is preferably from 50 to 500 nm, and more preferably from 70 to 300 nm.

A method of forming the metallic reflective layer is not particularly limited, and either a wet method or a dry method may be employed.

Examples of wet methods include known methods such as so-called metal plating methods (electroless plating or electroplating), and a method of applying a solution containing a metal complex compound.

Examples of dry methods include vacuum evaporation, sputtering, ion plating, and the like.

An example of a preferred embodiment of a metallic reflective layer formation method in the present invention is a method in which (i) a primer layer is formed on the resin substrate, (ii) a plating catalyst or a precursor thereof is applied to the formed primer layer, (iii) plating is performed on the primer layer to which the plating catalyst or the precursor thereof has been applied.

Each of the above steps (i) to (iii) will be described in detail below.

### (Step (i): Primer layer formation step)

Step (i) is a step in which a primer layer is formed on a resin substrate.

The primer layer is a layer disposed between the resin substrate and the metallic reflective layer and serving to increase the adhesion therebetween.

The primer layer is obtained by performing at least one of heat treatment and photoirradiation treatment (also referred to as "energy application" hereinafter) on a layer containing a polymer having a functional group that interacts with a plating catalyst or a precursor thereof and a polymerizable group.

First, the polymer used will be described in detail, and then the procedure of Step (i) will be described in detail.

The polymer used in the primer layer contains a functional group that interacts with a plating catalyst or a precursor thereof (also referred to as "interactive group" hereinafter) and a polymerizable group. The interactive group is a group that interacts with a plating catalyst or a precursor thereof, and has the role of increasing adhesion between the metallic reflective layer and the primer layer. In response to at least one of heat treatment and photoirradiation treatment to be described later, the polymerizable group undergoes cross-linking reaction to thereby increase the strength of the primer layer while a part of the polymerizable group reacts with the resin substrate to thereby increase adhesion between the resin substrate and the primer layer.

The polymerizable group is not limited as long as it is a functional group that can form, upon energy application, chemical bonds among polymers or between a polymer and the resin substrate. Examples of the polymerizable group include radical-polymerizable groups, cationic-polymerizable groups, and the like. Of these, radical-polymerizable groups are preferred from the perspective of reactivity.

Examples of the radical-polymerizable groups include a methacryloyl group, an acryloyl group, an itaconate group, a crotonate group, an isocrotonate group, a maleate group, a styryl group, a vinyl group, an acrylamide group, a methacrylamide group, and the like. Among these, a methacryloyl group, an acryloyl group, a vinyl group, a styryl group, an acrylamide group, and a methacrylamide group are preferred. Even among these, a methacryloyl group, an acryloyl group, an acrylamide group, and a methacrylamide group are more preferred from the perspectives of radical polymerization reactivity and flexibility in synthesis, and an acrylamide group and a methacrylamide group are even more preferred from the perspective of alkali resistance.

The type of interactive group is not particularly limited provided that it is a group that interacts with a plating catalyst or a precursor thereof, and examples thereof include nitrogen-containing functional groups such as an amino group, an amide group, an imide group, a urea group, a tertiary amino group, an ammonium group, an amidine group, a triazine ring, a triazole ring, a benzotriazole group, an imidazole group, a benzimidazole group, a quinoline group, a pyridine group, a pyrimidine group, a pyrazine group, a quinazoline group, a quinoxaline group, a purine group, a triazine group, a piperidine group, a piperazine group, a pyrrolidine group, a pyrazole group, an aniline group, groups containing an alkylamine structure, groups containing an isocyanuric structure, a nitro group, a nitroso group, an azo group, a diazo group, an azido group, a cyano group, a cyanate group (R-O-CN), and the like; oxygen-containing functional groups such as an ether group, a hydroxy group, a phenolic hydroxy group, a carboxyl group, a carbonate group, a carbonyl group, an ester group, groups containing an N-oxide structure, groups containing an S-oxide structure, groups containing an N-hydroxy structure, and the like; sulfur-containing functional groups such as a thiophene group, a thiol group, a thiourea group, a thiocyanuric group, a benzothiazole group, a mercaptotriazine group, a thioether group, a thioxy group, a sulfoxide group, a sulfone group, a sulfite group, groups containing a sulfoximine structure, groups containing a sulfonate structure, a sulfonate group, groups containing a sulfonic acid ester structure, and the like; phosphorus-containing functional groups such as a phosphate group, a phosphoroamide group, a phosphine group, groups containing a phosphoric acid ester structure, and the like; and groups containing a halogen atom such as chlorine or bromine or the like, as well as salts thereof in the case where a functional group can take on a salt structure.

Among these, ionic polar groups such as a carboxyl group, a sulfonate group, a phosphate group, and a boronic acid group, and nondissociative functional groups such as an ether group or a cyano group are more preferred due to their high polarity and high adsorption ability.

From the perspectives of ease of polymer synthesis and adhesion between the resin substrate and the metallic reflective layer, the polymer preferably contains a unit (repeating unit) represented by formula (1) below and a unit represented by formula (2) below.

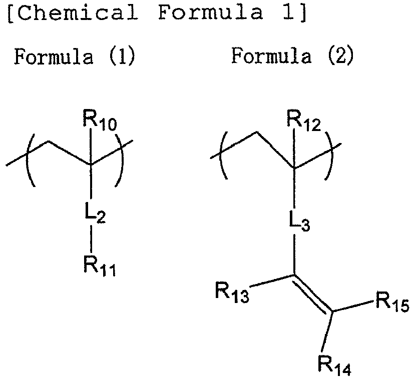

In formula (1), R₁₀ denotes a hydrogen atom or an alkyl group (for example, a methyl group, an ethyl group, or the like).

In formula (1), L₂ denotes a single bond or a divalent linking group. Examples of the divalent linking group include optionally substituted divalent aliphatic hydrocarbon groups (preferably having from 1 to 8 carbons; for example, alkylene groups such as a methylene group, an ethylene group, or a propylene group), optionally substituted divalent aromatic hydrocarbon groups (preferably having from 6 to 12 carbons; for example, a phenylene group), and -O-, -S-, -SO₂-, -N(R)- (wherein R is an alkyl group), -CO-, -NH-, -COO-, - CONH-, or a group in which these are combined (for example, an alkyleneoxy group, an alkyleneoxycarbonyl group, an alkylenecarbonyloxy group, and the like), and the like.

In formula (1), R₁₁ denotes an interactive group. The definition, specific examples, and preferred embodiments of the interactive group are as described above.

Furthermore, the polymer may contain two or more kinds of units represented by formula (1) having different interactive groups denoted by R₁₁. For example, a unit represented by formula (1) in which R₁₁ is an ionic polar group and a unit represented by formula (1) in which R₁₁ is a nondissociative group may be contained in the polymer.

In formula (2), R₁₂ to R₁₅ denote, each independently, a hydrogen atom or an optionally substituted alkyl group.

When R₁₂ to R₁₅ are optionally substituted alkyl groups, alkyl groups having from 1 to 6 carbons are preferred, and alkyl groups having from 1 to 4 carbons are more preferred. More specifically, examples of unsubstituted alkyl groups include a methyl group, an ethyl group, a propyl group, and a butyl group. Examples of substituted alkyl groups include a methyl group, an ethyl group, a propyl group, and a butyl group substituted with a methoxy group, a hydroxy group, a halogen atom (for example, a chlorine atom, a bromine atom, or a fluorine atom) or the like.

Furthermore, as R₁₂, a hydrogen atom, a methyl group, or a methyl group substituted with a hydroxy group or a bromine atom is preferred. As R₁₃, a hydrogen atom, a methyl group, or a methyl group substituted with a hydroxy group or a bromine atom is preferred. As R₁₄, a hydrogen atom is preferred. As R₁₅, a hydrogen atom is preferred.

In formula (2), L₃ denotes a single bond or a divalent linking group. Specific examples and preferred embodiments of the divalent linking group are the same as those of L₂ in formula (1).

The most preferred ranges of the polymer include a copolymer containing a unit represented by formula (A) below, a unit represented by formula (B) below and a unit represented by formula (C) below, a copolymer containing a unit represented by formula (A) below and a unit represented by formula (B) below, and a copolymer containing a unit represented by formula (A) below and a unit represented by formula (C) below.

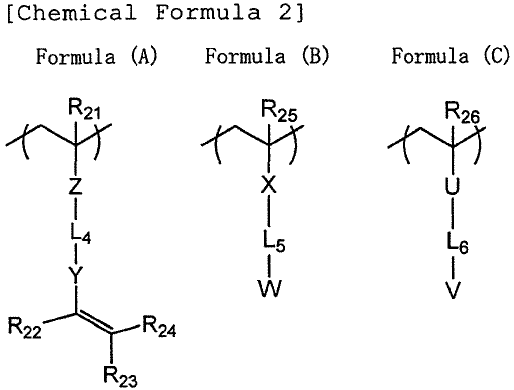

In the above formulas (A) to (C), R₂₁ to R₂₆ denote, each independently, a hydrogen atom or an optionally substituted alkyl group having from 1 to 4 carbons. X, Y, Z, and U denote, each independently, a single bond or a divalent linking group. L₄, L₅, and L₆ denote, each independently, a single bond or a divalent linking group. W denotes an interactive group consisting of a nondissociative functional group. V denotes an interactive group consisting of an ionic polar group. Specific examples and preferred embodiments of the divalent linking group are the same as those of L₂ in formula (1).

In the unit represented by formula (A), Y and Z are preferably, each independently, an ester group, an amide group, or a phenylene group (-C₆H₄-). L₄ is preferably an optionally substituted divalent organic group (especially a hydrocarbon group) having from 1 to 10 carbons.

In the unit represented by formula (B), W is preferably a cyano group or an ether group. X and L₅ are both preferably single bonds.

For the unit represented by formula (C), V is preferably a carboxylic acid group, an embodiment in which V is a carboxylic acid group and L₆ contains a ring structure having from 4 to 8 members at a portion linked to V is preferred, and an embodiment in which V is a carboxylic acid group and the chain length of L₆ is from 6 to 18 atoms is also preferred. In addition, for the unit represented by formula (C), an embodiment in which V is a carboxylic acid group and U and L₆ are single bonds is also preferred. Among these, an embodiment in which V is a carboxylic acid group and U and L₆ are both single bonds is most preferred.

The contents of units represented by formulas (A) to (C) are preferably in the following ranges.

Specifically, in the case of the copolymer containing a unit represented by formula (A), a unit represented by formula (B) and a unit represented by formula (C), the ratio of unit represented by formula (A) : unit represented by formula (B) : unit represented by formula (C) is preferably from 5 to 50 mol% : from 5 to 40 mol% : from 20 to 70 mol%, and more preferably from 10 to 40 mol% : from 10 to 35 mol% : from 20 to 60 mol%.

In the case of the copolymer containing a unit represented by formula (A) and a unit represented by formula (B), the ratio of unit represented by formula (A) : unit represented by formula (B) is preferably from 5 to 50 mol% : from 50 to 95 mol%, and more preferably from 10 to 40 mol% : from 60 to 90 mol%.

In the case of the copolymer containing a unit represented by formula (A) and a unit represented by formula (C), the ratio of unit represented by formula (A) : unit represented by formula (C) is preferably from 5 to 50 mol% : from 50 to 95 mol%, and more preferably from 10 to 40 mol% : from 60 to 90 mol%.

In these ranges, the improvement in polymerization of the polymer by heat treatment or photoirradiation treatment, the decrease in resistance of the primer layer, the improvement in moisture-resistant adhesion, and the like are achieved.

The method of forming a layer containing the above polymer is not particularly limited, and a known method may be employed. One example is a method in which a composition for forming the layer containing the above polymer is applied to the resin substrate, and then dried as necessary to form the layer.

At least one of heat treatment and photoirradiation treatment is performed on the layer containing the polymer. The layer containing the polymer may be subjected to one or both of heat treatment and photoirradiation treatment. When both treatments are performed, they may be performed in separate steps or simultaneously.

By performing these treatments, the polymerizable groups are activated, reactions of the polymerizable groups with each other and between the polymerizable group and the resin substrate proceed, and the primer layer adhered on the resin substrate is formed.

The optimal heat treatment conditions are selected according to the type of polymer used, but it is preferable that treatment be performed at a temperature of from 60 to 150°C (more preferably from 80 to 120°C) for from 0.1 to 3 hours (more preferably from 0.5 to 2 hours) from the perspectives that crosslink density of the primer layer is increased and weather resistance and flexibility of the film mirror are improved.

The optimal photoirradiation treatment conditions are selected according to the type of polymer used, but it is preferable that the exposure quantity be from 10 to 8000 mJ/cm², and preferably from 100 to 3000 mJ/cm², from the perspectives that crosslink density of the primer layer is increased and weather resistance and flexibility of the film mirror are improved. The exposure wavelength is preferably from 200 to 300 nm.

The light source used in exposure is not particularly limited, and may be, for example, a mercury lamp, a metal halide lamp, a xenon lamp, a chemical lamp, a carbon arc lamp, or the like. Exemplary radioactive rays include an electron beam, an X-ray, an ion beam, a far-infrared ray, and the like.

An unreacted polymer may be removed from the composition after heat treatment or photoirradiation treatment as appropriate. Examples of the removal method include methods using solvents. Examples of solvents include a solvent that dissolves a polymer, and, in the case of an alkali-soluble polymer, alkali-based developing solutions (sodium carbonate, sodium hydrogen carbonate, ammonia water, sodium hydroxide aqueous solution) and the like may be used for removal.

The thickness of the primer layer is not particularly limited but is preferably from 0.05 to 10 µm, and more preferably from 0.3 to 5 µm, because weather resistance and flexibility of the film mirror are excellent.

### (Step (ii): Catalyst provision step)

The catalyst provision step is a step in which a plating catalyst or a precursor thereof is provided to the primer layer. In this step, the interactive group in the primer layer adsorbs the plating catalyst or the precursor thereof. For example, when a metal ion is used as the plating catalyst precursor, the primer layer adsorbs the metal ion.

Examples of the plating catalyst or the precursor thereof are those that function as catalysts or electrodes in plating in "Step (iii): Plating step" to be described below. Therefore, the plating catalyst or the precursor thereof is determined depending on the type of plating in the plating step.

The plating catalyst (for example, an electroless plating catalyst) or the precursor thereof used will be described in detail below.

As an electroless plating catalyst, one that can become an active nucleus during electroless plating is preferred and examples thereof include metals having catalytic ability in an auto-catalytic reduction reaction (metals known as being capable of electroless plating and having an ionization tendency lower than that of Ni), specifically Pd, Ag, Cu, Ni, Al, Fe, Co, and the like. Among these, Pd or Ag is preferred due to high catalytic ability.

As an electroless plating catalyst precursor, one that can become an electroless plating catalyst by chemical reaction is preferred. For example, a metal ion of a metal cited above as an electroless plating catalyst may be used. The metal ion that is the electroless plating catalyst precursor becomes by a reduction reaction a zero-valent metal which is an electroless plating catalyst. An electroless plating catalyst may be formed by providing the metal ion that is an electroless plating catalyst precursor to the primer layer and then independently changing the metal ion to a zero-valent metal by a reduction reaction prior to the immersion into the electroless plating bath, or the metal ion may be immersed as the electroless plating catalyst precursor into an electroless plating bath to allow the metal ion to be changed to a metal (electroless plating catalyst) using a reducing agent in the electroless plating bath.

The metal ion that is the electroless plating catalyst precursor is preferably provided to the primer layer using a metal salt. The metal salt used is not particularly limited provided that it is dissociated into a metal ion and a base (anion) when dissolved in an appropriate solvent, and examples thereof include M(NO₃)ₙ MClₙ, M_{2/n}(SO₄), M_{3/n}(PO₄)Pd(OAc)ₙ (where M denotes a metal atom of valence n), and the like. As the metal ion, one obtained by dissociating the above metal salts may be advantageously used. Specific examples of the metal ion include Ag ion, Cu ion, Al ion, Ni ion, Co ion, Fe ion, and Pd ion. Among these, one capable of multidentate coordination is preferred, and Ag ion, Cu ion, and Pd ion are particularly preferred due to the number of types of coordinatable functional groups and catalytic ability.

In the case of reducing the electroless plating catalyst precursor prior to the plating step, the reduction step may be performed as a separate step prior to electroless plating by preparing a catalyst activating solution (reducing solution). The catalyst activating solution often contains a reducing agent that can reduce the electroless plating catalyst precursor (primarily a metal ion) to a zero-valent metal, and a pH adjusting agent for activating the reducing agent.

The concentration of the reducing agent relative to the total solution is preferably from 0.1 to 10 wt%.

Boron-based reducing agents such as sodium borohydride and dimethylamine borane and reducing agents such as formaldehyde and hypophosphorous acid may be used as the reducing agent.

In particular, reduction is performed preferably with an alkaline aqueous solution containing formaldehyde.

A catalyst used for performing electroplating without performing electroless plating may be used as the plating catalyst. Examples of such catalysts include zero-valent metals, and more specifically, Pd, Ag, Cu, Ni, Al, Fe, Co, and the like. Among these, those capable of multidentate coordination are preferred, and Pd, Ag, and Cu are particularly preferred due to their high adsorption (attachment) properties with respect to interactive groups and high catalytic ability.

As a method of providing the plating catalyst or the precursor thereof to the primer layer, a solution containing the plating catalyst or the precursor thereof (for example, a dispersion in which a metal is dispersed in an appropriate dispersion medium, or a solution containing a dissociated metal ion prepared by dissolving a metal salt in an appropriate solvent) is prepared, then the dispersion or the solution is applied to the primer layer, or the resin substrate on which the primer layer has been formed is immersed in the dispersion or the solution.

### (Step (iii): Plating step)

The plating step is a step in which the metallic reflective layer is formed by plating on the primer layer to which the metal catalyst or the precursor thereof has been provided.

The type of plating performed in this step may be electroless plating or electroplating, and can be selected as appropriate depending on the function of the plating catalyst or the precursor thereof provided to the primer layer in the catalyst provision step above. In short, in this step, either of electroplating or electroless plating may be performed on the primer layer to which the plating catalyst or precursor thereof has been provided.

A plating process that is advantageously performed in this step will be described below.

Electroless plating refers to an operation of depositing a metal by a chemical reaction using a solution in which a metal ion of metal to be deposited for plating is dissolved.

Electroless plating is performed by, for example, cleaning a resin substrate having a primer layer to which an electroless plating catalyst has been provided using water to remove an excess electroplating catalyst (metal), and then immersing the resin substrate in an electroless plating bath. A known electroless plating bath may be used as the electroless plating bath.

Furthermore, in the case where a resin substrate having a primer layer to which an electroless plating catalyst precursor has been provided is immersed in an electroless plating bath in the state where the primer layer is adsorbed or impregnated with the electroless plating catalyst precursor, it is preferred that the substrate be cleaned to remove an excess precursor (metal salt or the like) and then immersed in the electroless plating bath. In this case, reduction of the plating catalyst precursor and subsequent electroless plating are performed in the electroless plating bath. Similarly to the above, a known electroless plating bath may be used as the electroless plating bath.

In this step, when the provided plating catalyst or the precursor thereof has the function of an electrode, electroplating can be performed on the primer layer to which the plating catalyst or the precursor thereof has been provided.

A conventional method known in the art may be used as the electroplating method in the present invention. Examples of the metal used in electroplating in this step include copper, chromium, lead, nickel, gold, silver, tin, zinc, and the like, and silver is preferred because it further improves the reflectance of the resultant film mirror.

In addition, after the electroless plating described above, electroplating may be further performed using the formed plating film as an electrode.

Examples of silver compounds used in plating include silver nitrate, silver acetate, silver sulfate, silver carbonate, silver methanesulfonate, ammoniacal silver, silver cyanide, silver thiocyanate, silver chloride, silver bromide, silver chromate, silver chloranilate, silver salicylate, silver diethyldithiocarbamate, diethyldithiocarbamic acid silver salt, and silver p-toluenesulfonate. Among these, silver methanesulfonate is preferred because it further improves the reflectance of the resultant film mirror.

### (Surface covering layer)

The surface covering layer (including the first surface covering layer and the second surface covering layer; hereinafter the same) is not particularly limited, and the constituent material thereof is not limited as long as it has transparency capable of transmitting light. Examples of the constituent material include resin, glass, ceramic, and the like, among which resin is preferred due to its excellent flexibility.

Examples of the resin include photocurable resins such as urethane (meth)acrylate resin, polyester (meth)acrylate resin, silicone (meth)acrylate resin, and epoxy (meth)acrylate resin; heat-curable resins such as phenol resin, urea resin, phenoxy resin, silicone resin, polyimide resin, diallyl phthalate resin, furan resin, bismaleimide resin, and cyanate resin; thermoplastic resins such as phenoxy resin, polyether sulfone, polysulfone, and polyphenylene sulfone; and the like. The constituent materials of the first surface covering layer and the second surface covering layer used in the second embodiment may be the same or different materials.

The thickness of the surface covering layer is not particularly limited but is preferably from 10 to 200 µm, and more preferably from 25 to 100 µm, because weather resistance and flexibility of the film mirror are more excellent.

The method of forming the surface covering layer is not particularly limited, and examples thereof include a method in which a predetermined resin substrate is adhered to the metallic reflective layer, and a method in which a curable composition containing the photocurable resin or the heat-curable resin described above is applied to the metallic reflective layer and then photocured by ultraviolet irradiation or heat-cured by heat.

### (Primer layer)

The constituent material of the optional primer layer is not particularly limited provided that it can improve adhesion between layers, and specific examples thereof include resin materials such as polyester resin, urethane resin, acrylic resin, urethane acrylic resin, polyamide resin, cycloolefin polymer resin, and the like.

The thickness of the primer layer is not particularly limited, but is preferably from 0.1 to 50 µm, and more preferably from 1 to 30 µm.

The method of forming the primer layer is not particularly limited. For example, in the case where urethane acrylic resin is used for the primer layer, there may be employed a method in which a mixed solution of urethane acrylate (for example, Ebecryl 8402, manufactured by Daicel-Cytec Co., Ltd.) and a photopolymerization initiator (for example, Irgacure 184, manufactured by Ciba Specialty Chemicals) is applied to the surface of the resin substrate, and then photocured by ultraviolet irradiation.

### (Adhesive layer)

The constituent material of the optional adhesive layer is not particularly limited provided that it has satisfactory adhesion and smoothness, and specific examples thereof include polyester resin, acrylate resin, melamine resin, epoxy resin, polyamide resin, vinyl chloride resin, vinyl chloride-vinyl acetate copolymer resin, and the like. One of these may be used alone, or two or more may be used together.

The thickness of the adhesive layer is not particularly limited, but is preferably from 0.01 to 5 µm, and more preferably from 0.1 to 2 µm, from the perspectives of adhesion, smoothness, reflectance, and the like.

The method of forming the adhesive layer is not particularly limited. For example, a conventional known coating method such as gravure coating, reverse coating, die coating, a blade coater, a roll coater, an air knife coater, a screen coater, a bar coater, a curtain coater, or the like may be used.

### (Back coat layer)

The material for forming the optional back coat layer is not particularly limited, and examples thereof include urethane resin, the resins contained in the surface covering layer described above, and the like.

The thickness of the back coat layer is not particularly limited, but is preferably from 0.5 to 50 µm, and more preferably from 1 to 30 µm.

The method of forming the back coat layer is not particularly limited. For example, in the case where the photocurable resin or the heat-curable resin described above is used for the back coat layer, there may be employed a method in which a curable composition containing any of these resins is applied to the back face of the resin substrate and then photocured by ultraviolet irradiation or heat-cured by heat.

### [Support member]

The support member in the reflecting mirror of the present invention is a frame-shaped support member supporting a peripheral edge of the film mirror as described above, and the frame-shaped support member as such is in contact with the film mirror and has a curved face convexed outward in a horizontal direction with respect to an opening face of the support member, with the radius of curvature of the curved face being not less than 8 mm.

The support member is not particularly limited in shape of a cross section parallel to the opening face, and the shape of such a cross section may be circular or polygonal, as is the case with the shape of the film mirror. Since it is easier to provide and adjust film mirror tension, a polygonal shape is preferred and a rectangular (quadrangular) shape is more preferred.

On the other hand, the support member has the cross section perpendicular to the opening face whose shape (hereafter also referred to as "perpendicular cross-sectional shape") represents that the support member has, in a portion thereof in contact with the film mirror, a curved face convexed outward in a horizontal direction with respect to the opening face of the support member and having a radius of curvature of not less than 8 mm. Specifically, as illustrated in FIG. 2, the support member 3 has the curved face 3b which is convexed outward in a horizontal direction with respect to the opening face 3a of the support member 3 in a portion in contact with the film mirror 2, and the radius of curvature of the curved face 3b is not less than 8 mm.

By using the support member which has a curved face of the radius of curvature as specified above, tension can be applied to the film mirror with a prescribed thickness as described above while keeping the amount of warpage small, and as a result, the reflecting mirror of the present invention is excellent in specular reflectivity and light-collecting characteristics.

In the present invention, since the amount of warpage of the film mirror is further reduced and the light-collecting characteristics of the reflecting mirror are further improved, the ratio between the radius of curvature (not less than 8 mm) of the curved face of the support member and the film thickness (0.10 to 0.30 mm) of the film mirror (radius of curvature/film thickness) is preferably not less than 80, more preferably not less than 90, and even more preferably 90 to 260.

Furthermore, in the present invention, since the amount of warpage of the film mirror is further reduced and the light-collecting characteristics of the reflecting mirror are further improved, the radius of curvature of the curved face of the support member is preferably not less than 15 mm and more preferably 15 to 30 mm.

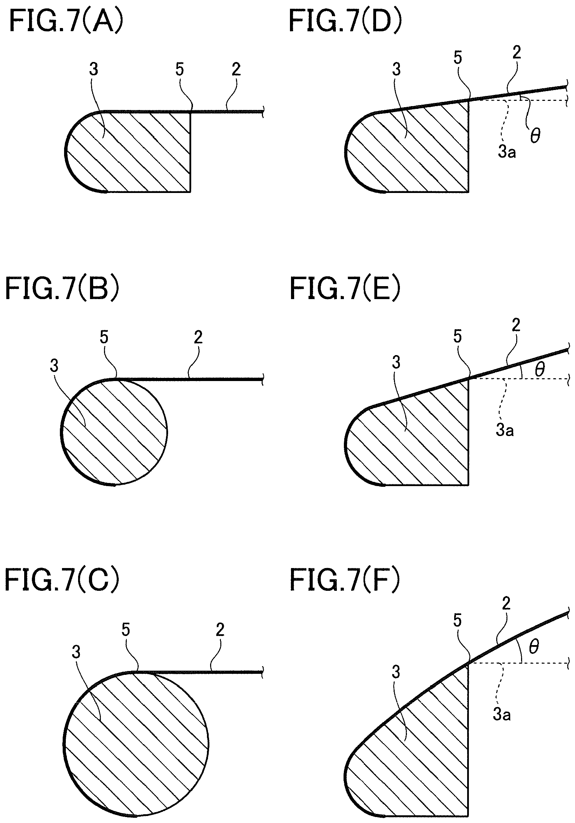

Additionally, in the present invention, since the specular reflectivity and light-collecting characteristics of the reflecting mirror are further improved, the angle (hereafter referred to as "exit angle") formed by a tangent to the support member and the opening face of the support member at the point in a cross section perpendicular to the opening face of the support member where the film mirror and the support member separate from each other (namely, the point represented as the exit point 5 in FIG. 2 and in FIG. 7 to be described later) is preferably 0° or greater but up to 20°, and more preferably 5 to 15°.

The perpendicular cross-sectional shape of the support member will be described in detail below using FIGS. 7(A) to 7(F).

Various section views of FIGS. 7(A) to 7(F) are examples of a schematic section view taken along section line B-B in FIG. 1, to which examples the perpendicular cross-sectional shape of the support member is not limited.

As illustrated in FIGS. 7(A) to 7(F), the perpendicular cross-sectional shape of the support member is not particularly limited provided that it represents the curved face as described above, and may be a shape consisting of a round part and a rectangular part (in an oblong shape) as illustrated in FIG. 7(A), or a circular shape containing a curved face as illustrated in FIGS. 7(B) and 7(C), or a shape consisting of a round part and a rectangular part (in a trapezoidal shape) as illustrated in FIGS. 7(D) to 7(F).

As illustrated in the working examples to be described later, out of FIGS. 7(A) to 7(D), FIGS. 7(A) to 7(C) each show an example in which the exit angle is 0°, while FIG. 7(D) shows an example in which the exit angle θ is 10°. FIG. 7(E) shows an example in which the exit angle θ is 15°, and FIG. 7(F) shows an example in which the exit angle θ is 30°.

The material that constitutes the support member is not particularly limited, and specific examples thereof include metal materials such as stainless steel (SUS), aluminum, aluminum alloy, and titanium; resin materials such as carbon fiber-reinforced plastic, polyether ether ketone (PEEK), and polyphenylene sulfide (PPS); and the like.

Among these, the metal materials are preferred from the perspective of bonding to the mounting body since the mounting body is often composed of a metal material, and stainless steel or aluminum is more preferred.

The thickness of the support member (t in FIG. 1) is not particularly limited, but from 1 to 10 mm is preferred, and from 2 to 5 mm is more preferred.

The width of a constituent member (frame member) of the support member (w in FIG. 1) is not particularly limited, but from 10 to 50 mm is preferred, and from 15 to 30 mm is more preferred.

The longitudinal width (long side) of the entire support member (H in FIG. 1) is preferably from 100 to 5000 mm, the lateral width (short side) (W in FIG. 1) is preferably from 100 to 2000 mm, and the ratio of the longitudinal width to the lateral width (longitudinal width/lateral width) is preferably from 1/1 to 10/1.

### [Method for producing reflecting mirror]

The method for producing the reflecting mirror of the present invention is not particularly limited but may include overlaying the film mirror 2 having a larger size than the support member 3 on the support member 3 and folding end portions of the film mirror 2 in directions of dashed arrows while applying tension to the film mirror 2 in directions of solid arrows, so as to bond them to the support member 3, as illustrated in FIG. 1.

As another method, the reflecting mirror may be produced by temporarily fixing the film mirror under a certain degree of tension to a frame for temporary fixing (temporary frame) having a larger size (H × W) and a smaller thickness (t) than the support member using adhesive tape or the like and pasting the support member with a pressure-sensitive adhesive applied thereto perpendicularly on the temporarily fixed film mirror, then pressing the support member inside the temporary frame to thereby bond (adhere) the peripheral edge of the film mirror to the support member.

In the present invention, the method for bonding an end portion of the film mirror to the support member is not particularly limited, and may be, for example, an adhesion method using an adhesive or a pressure-sensitive adhesive, a method for fixing the two to each other using clips, and the like.

Furthermore, in the present invention, it is preferred that a region where the peripheral edge of the film mirror and the support member are bonded together has at least two through-holes which are used in bonding to the mounting body, such as a solar reflector body (solar radiation tracking system).

By using such through-holes, the support member and the mounting body can be easily anchored to each other using screws, bolts or the like.

### EXAMPLES

The present invention will be specifically described in reference to the following examples. However, the present invention is not limited thereto.

### <Example 1>

### (Formation of primer layer)

On a PET substrate (thickness: 50 µm, manufactured by Fujifilm Corporation), a solution containing the acrylic polymer represented by formula (3) was applied by spincoating to a thickness of 500 nm, and this was dried at 80°C for 5 minutes to produce a coating film.

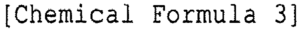

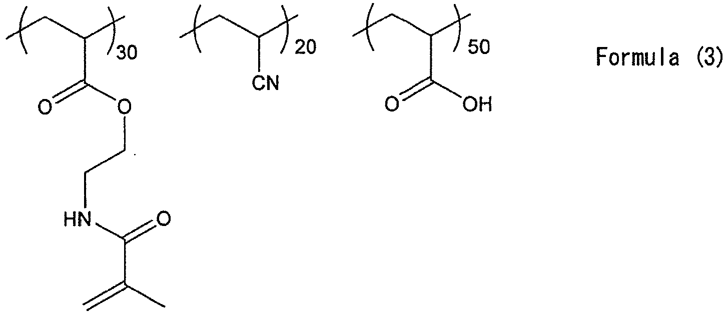

Here, the numeric values in formula (3) represent the proportions (mol%) of the respective units.

The method of synthesizing the acrylic polymer represented by formula (3) is as follows.

One liter of ethyl acetate and 159 g of 2-aminoethanol were introduced into a 2 liter three-necked flask and cooled in an ice bath. To this, 150 g of 2-bromoisobutyryl bromide was added dropwise while adjusting to an internal temperature of not greater than 20°C. Then, the internal temperature was raised to room temperature (25°C), and the mixture was reacted for 2 hours. After the reaction ended, the reaction was quenched by adding 300 mL of distilled water. The ethyl acetate layer was then washed four times with 300 mL of distilled water, dried with magnesium sulfate, and ethyl acetate was distilled off to thereby obtain 80 g of starting material A.

Then, 47.4 g of starting material A, 22 g of pyridine, and 150 mL of ethyl acetate were introduced into a 500 mL three-necked flask and cooled in an ice bath. To this, 25 g of acryloyl chloride was added dropwise while adjusting to an internal temperature of not greater than 20°C. Then, the temperature was raised to room temperature, and the mixture was reacted for 3 hours. After the reaction ended, 300 mL of distilled water was added and the reaction was quenched. The ethyl acetate layer was then washed four times with 300 mL of distilled water, dried with magnesium sulfate, and ethyl acetate was distilled off. The following monomer M1 was purified by column chromatography and obtained in an amount of 20 g.

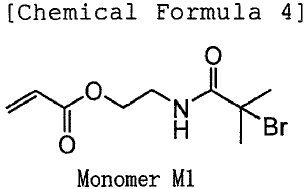

N,N-Dimethylacetamide in an amount of 8 g was introduced into a 500 mL three-necked flask and heated to 65°C under nitrogen flow. To this, 14.3 g of the monomer M1 obtained above, 3.0 g of acrylonitrile (manufactured by Tokyo Chemical Industry Co., Ltd.), 6.5 g of acrylic acid (manufactured by Tokyo Chemical Industry Co., Ltd.), and a solution in which 0.4 g of V-65 (manufactured by Wako Pure Chemical Industries, Ltd.) was dissolved in 8 g of N,N-dimethylacetamide was added dropwise over the course of 4 hours. After dropwise addition was completed, the mixture was stirred for another 3 hours. Then, 41 g of N,N-dimethylacetamide was added, and the reaction solution was cooled to room temperature. To this reaction solution, 0.09 g of 4-hydroxy-TEMPO (manufactured by Tokyo Chemical Industry Co., Ltd.) and 54.8 g of DBU were added, and the solution was reacted at room temperature for 12 hours. Then, 54 g of 70 wt% aqueous solution of methanesulfonic acid was added to the reaction solution. After the reaction ended, reprecipitation was performed with water, the solids were removed, and 12 g of the acrylic polymer represented by formula (3) (weight-average molecular weight: 53,000) was obtained.

The method of preparing a solution containing the acrylic polymer represented by formula (3) is as follows.

The acrylic polymer represented by formula (3) (7 parts by weight), 1-methoxy-2-propanol (74 parts by weight), and water (19 parts by weight) were mixed, and a photopolymerization initiator (Esacure KTO-46, manufactured by Lamberti) (0.35 parts by weight) was added to this mixed solution. The mixture was mixed with stirring and a solution containing the acrylic polymer represented by formula (3) was obtained.

The coating film above was irradiated with light at a wavelength of 254 nm using a UV exposure device manufactured by San-ei Electric Co., Ltd. (model: UVF-502S, lamp: UXM-501MD) with a cumulative exposure of 1000 mJ/cm², thereby forming a primer layer (thickness: 500 nm).

Furthermore, development was performed in order to remove unreacted polymer from the primer layer. Specifically, the PET substrate with the primer layer was immersed in 1 wt% aqueous solution of sodium hydrogen carbonate for 5 minutes, and then washed with pure water.

### (Formation of metallic reflective layer)

Next, the PET substrate with the primer layer was immersed in 1 wt% aqueous solution of silver nitrate aqueous solution for 5 minutes and then washed with pure water to thereby obtain a PET substrate with a primer layer to which an electroless plating catalyst precursor (silver ions) had been provided.

Additionally, the obtained resin substrate with the primer layer was immersed in an alkali aqueous solution (pH 12.5) containing 0.14 wt% NaOH and 0.25 wt% formalin (serving as a reducing agent) for 1 minute and then washed with pure water to thereby obtain a PET substrate with a primer layer to which a reducing metal (silver) had been provided.

Then, the following electroplating process was performed on the primer layer to which the reducing metal (silver) had been provided, and a metallic (silver) reflective layer with a thickness of 200 nm was formed on the primer layer.

DAIN Silver Bright PL-50 (manufactured by Daiwa Fine Chemicals Co., Ltd.) adjusted to a pH of 9.0 using 8M potassium hydroxide was used as the electroplating solution. The PET substrate with the primer layer having a reducing metal on the surface was immersed in the electroplating solution and plated for 15 seconds at 0.5 A/dm², and then washed in flowing pure water for 1 minute.

### (Formation of surface covering layer)

Next, an urethane adhesive (product name: LIS825, LCR901, manufactured by Toyo Ink Co., Ltd) was applied to the metallic reflective layer and dried for 5 minutes to produce an adhesive layer (thickness: 8 µm).

Then, as a surface covering layer, a PMMA substrate (HBS006, thickness: 50 µm, manufactured by Mitsubishi Rayon Co., Ltd.) was adhered to the adhesive layer to produce a film mirror.

Table 1 below shows the size and the film thickness of the film mirror produced, the type of resin substrate, the type of reflective layer, and the type of surface covering layer. In Table 1, "□700 mm" in the Size column means 700 mm × 700 mm square.

### (Production of reflecting mirror)

First, the produced film mirror was temporarily fixed to a frame for temporary fixing (size, 700 mm × 700 mm square; width, 25 mm; thickness, 5 mm) using adhesive tape while a certain degree of tension was applied.

Next, a pressure-sensitive adhesive (FINETAC manufactured by DIC Corp.) was applied to the frame surface of a frame-shaped support member made of aluminum (A5052) (size, 500 mm × 500 mm square; width, 25 mm; thickness, 10 mm; the perpendicular cross-sectional shape as shown in FIG. 7(A); exit angle, 0°; radius of curvature, 9 mm).

Then, the surface of the support member to which the pressure-sensitive adhesive had been applied was pasted perpendicularly on the film mirror temporarily fixed to the frame for temporary fixing (temporary frame), and the support member was further pressed inside the temporary frame to thereby produce a reflecting mirror.

Table 1 below shows the size, the perpendicular cross-sectional shape, the exit angle, and the radius of curvature of the support member used, and also shows the ratio between the radius of curvature of the support member and the film thickness of the film mirror (radius of curvature/film thickness), and the method of bonding a film mirror and a support member. In Table 1, "□500 mm" in the Size column means 500 mm × 500 mm square.

### <Example 2>

A reflecting mirror was produced by the same method as in Example 1 except that the thickness of the PET substrate was changed to 150 µm and the film thickness of the film mirror was 0.21 mm.

### <Example 3>

A reflecting mirror was produced by the same method as in Example 1 except that the thickness of the PET substrate was changed to 220 µm and the film thickness of the film mirror was 0.28 mm.

### <Example 4>

A reflecting mirror was produced by the same method as in Example 2 except that a primary layer was not formed and a metallic reflective layer formed by the method described below was used.

### (Formation of metallic reflective layer)

A metallic reflective layer having eight TiO₂ layers and seven SiO₂ layers was formed by alternately forming layers of TiO₂ with a thickness of 65 nm and layers of SiO₂ with a thickness of 110 nm by sputtering (PVD) on a PET substrate (thickness, 150 µm; manufactured by Fujifilm Corporation).

### <Example 5>

A reflecting mirror was produced by the same method as in Example 2 except that instead of the frame-shaped support member made of aluminum (A5052) (size, 500 mm × 500 mm square; width, 25 mm; thickness, 10 mm; the perpendicular cross-sectional shape as shown in FIG. 7(A); exit angle, 0°; radius of curvature, 9 mm), a frame-shaped support member made of stainless steel (SUS304) (size, 500 mm × 500 mm square; width, 25 mm; thickness, 10 mm; the perpendicular cross-sectional shape as shown in FIG. 7(A); exit angle, 0°; radius of curvature, 9 mm) was used.

### <Example 6>

A reflecting mirror was produced by the same method as in Example 1 except that instead of the frame-shaped support member made of aluminum (A5052) (size, 500 mm × 500 mm square; width, 25 mm; thickness, 10 mm; the perpendicular cross-sectional shape as shown in FIG. 7(A); exit angle, 0°; radius of curvature, 9 mm), a frame-shaped support member made of aluminum (A5052) (size, 500 mm × 500 mm square; width, 25 mm; thickness, 10 mm; the perpendicular cross-sectional shape as shown in FIG. 7(B); exit angle, 0°; radius of curvature, 18 mm) was used.

### <Example 7>

A reflecting mirror was produced by the same method as in Example 6 except that the thickness of the PET substrate was changed to 150 µm and the film thickness of the film mirror was 0.21 mm.

### <Example 8>

A reflecting mirror was produced by the same method as in Example 6 except that the thickness of the PET substrate was changed to 220 µm and the film thickness of the film mirror was 0.28 mm.

### <Example 9>

A reflecting mirror was produced by the same method as in Example 1 except that instead of the frame-shaped support member made of aluminum (A5052) (size, 500 mm × 500 mm square; width, 25 mm; thickness, 10 mm; the perpendicular cross-sectional shape as shown in FIG. 7(A); exit angle, 0°; radius of curvature, 9 mm), a frame-shaped support member made of aluminum (A5052) (size, 500 mm × 500 mm square; width, 25 mm; thickness, 10 mm; the perpendicular cross-sectional shape as shown in FIG. 7(C); exit angle, 0°; radius of curvature, 28 mm) was used.

### <Example 10>

A reflecting mirror was produced by the same method as in Example 9 except that the thickness of the PET substrate was changed to 150 µm and the film thickness of the film mirror was 0.21 mm.

### <Example 11>

A reflecting mirror was produced by the same method as in Example 9 except that the thickness of the PET substrate was changed to 220 µm and the film thickness of the film mirror was 0.28 mm.

### <Example 12>

A reflecting mirror was produced by the same method as in Example 2 except that instead of the frame-shaped support member made of aluminum (A5052) (size, 500 mm × 500 mm square; width, 25 mm; thickness, 10 mm; the perpendicular cross-sectional shape as shown in FIG. 7(A); exit angle, 0°; radius of curvature, 9 mm), a frame-shaped support member made of aluminum (A5052) (size, 500 mm × 500 mm square; width, 25 mm; thickness, 10 mm; the perpendicular cross-sectional shape as shown in FIG. 7(D); exit angle, 10°; radius of curvature, 18 mm) was used.

### <Example 13>

A reflecting mirror was produced by the same method as in Example 2 except that instead of the frame-shaped support member made of aluminum (A5052) (size, 500 mm × 500 mm square; width, 25 mm; thickness, 10 mm; the perpendicular cross-sectional shape as shown in FIG. 7(A); exit angle, 0°; radius of curvature, 9 mm), a frame-shaped support member made of aluminum (A5052) (size, 500 mm × 500 mm square; width, 25 mm; thickness, 10 mm; the perpendicular cross-sectional shape as shown in FIG. 7(E); exit angle, 17°; radius of curvature, 18 mm) was used.

### <Example 14>

A reflecting mirror was produced by the same method as in Example 2 except that instead of the frame-shaped support member made of aluminum (A5052) (size, 500 mm × 500 mm square; width, 25 mm; thickness, 10 mm; the perpendicular cross-sectional shape as shown in FIG. 7(A); exit angle, 0°; radius of curvature, 9 mm), a frame-shaped support member made of aluminum (A5052) (size, 500 mm × 500 mm square; width, 25 mm; thickness, 10 mm; the perpendicular cross-sectional shape as shown in FIG. 7(F); exit angle, 30°; radius of curvature, 18 mm) was used.

### <Comparative Example 1>

A reflecting mirror was produced by the same method as in Example 1 except that the thickness of the PET substrate was changed to 350 µm and the film thickness of the film mirror was 0.41 mm.

### <Comparative Example 2>

A reflecting mirror was produced by the same method as in Example 2 except that instead of the frame-shaped support member made of aluminum (A5052) (size, 500 mm × 500 mm square; width, 25 mm; thickness, 10 mm; the perpendicular cross-sectional shape as shown in FIG. 7(A); exit angle, 0°; radius of curvature, 9 mm), a frame-shaped support member made of aluminum (A5052) (size, 500 mm × 500 mm square; width, 25 mm; thickness, 10 mm; the perpendicular cross-sectional shape as shown in FIG. 7(A); exit angle, 0°; radius of curvature, 6 mm) was used.

### <Comparative Example 3>

Without using a support member, a pressure-sensitive adhesive (FINETAC manufactured by DIC Corporation) was applied to the film mirror as produced in Example 2 on the resin substrate side so as to bond the film mirror to a mounting body (SUS304).

The amount of warpage, the specular reflectivity, the light-collecting characteristics, and the heat resistance of each of the produced reflecting mirrors (of the film mirror for Comparative Example 3; the same applying in the rest) were evaluated by the methods described below. The results are shown in Table 1. For Comparative Example 3 having used no support member, the amount of warpage was not measured, which is denoted by "-" in Table 1.

### <Amount of warpage>

The amount of warpage (C in FIG. 2) of each of the produced reflecting mirrors was measured. A side face of the reflecting mirror was imaged by a CCD camera (pixel size, 2.5 µm × 2.5 µm), and the amount of warpage was calculated from the captured image.

Evaluation was made according to the following criteria.
AA: The amount of warpage was less than 20 µm.
A: The amount of warpage was 20 µm or greater but less than 75 µm.
B: The amount of warpage was 75 µm or greater but less than 100 µm.
C: The amount of warpage was 100 µm or greater.

### <Specular reflectivity (diffuse component ratio)>

The specular reflectivity of each of the produced reflecting mirrors was evaluated by calculating the energy ratio of the diffuse component relative to total reflected light.

Specifically, the reflecting mirror was irradiated with light from a light source LED, the resulting reflected light was allowed to pass through a lens and received as an image by a CCD image sensor, and the proportion of the diffuse component with respect to the total area of the specular reflection component and the diffuse component in the obtained image was calculated.

Evaluation was made according to the following criteria.
AA: The diffuse component ratio was lower than 2.0%.
A: The diffuse component ratio was 2.0% or higher but lower than 5.0%.
B: The diffuse component ratio was 5.0% or higher but lower than 10.0%.
C: The diffuse component ratio was 10.0% or higher.

### <Light-collecting characteristics>

The light-collecting characteristics of each of the produced reflecting mirrors were evaluated by measuring the intensity (energy) of solar radiation reflected by the reflecting mirror by using photodiodes.

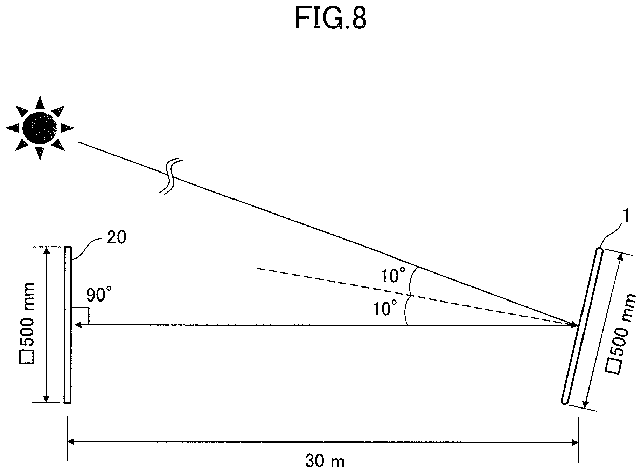

Specifically, on the surface of a light-receiving plate 20 illustrated in FIG. 8, photodiodes (not shown) were placed at a total of 25 points (5 × 5) with 10 cm spacing in a square grid pattern, and the mean value of the intensity was calculated. As illustrated in FIG. 8, the distance between the light-receiving plate 20 and the reflecting mirror 1 was 30 m, and the angle between solar radiation (incident light) and the reflecting mirror 1 as well as the angle between the reflecting mirror 1 and the reflected light (light-receiving plate 20) were each 10°.

Evaluation was made according to the following criteria.
AA: The intensity was 95% or higher of the solar radiation energy.
A: The intensity was 90% or higher but lower than 95% of the solar radiation energy.
B: The intensity was 80% or higher but lower than 90% of the solar radiation energy.
C: The intensity was lower than 80% of the solar radiation energy.

### <Heat resistance (Temperature cycle properties)>

With respect to the temperature cycle properties of each of the produced reflecting mirrors, each reflecting mirror was left to stand at -40°C for 30 minutes and then at 65°C for 30 minutes repeatedly for 3000 cycles, and subsequently inspected for planar defects, such as wrinkling, undulation and peeling off of the film mirror. Evaluation was made according to the following criteria.
AA: No planar defects occurred even though the number of cycles had been doubled to 6000.
A: No planar defects occurred.
B: Planar defects slightly occurred.
C: The film mirror partially peeled off the support member.
D: Planar defects occurred considerably.

**[Table 1]**

| Table 1 (1/3) | | | | | | | | | | | | |
|---|---|---|---|---|---|---|---|---|---|---|---|---|
| | Film mirror configuration | | | | | Support member configuration | | | | | Others | |
| | Size | Film thickness | Resin substrate | Reflective layer | Surface covering layer | Size | Perpendicular cross-sectional shape | Exit angle | Radius of curvature | Material | Ratio (radius of curvature/ film thickness) | Bonding between film mirror and support member |
| Ex. 1 | □700mm | 0.11mm | PET | Ag | Acrylic resin | □500mm | FIG. 7(A) | 0° | 9mm | Aluminum A5052 | 81.8 | Pressure-sensitive adhesive |
| Ex. 2 | □700mm | 0.21mm | PET | Ag | Acryl ic resin | □500mm | FIG. 7(A) | 0° | 9mm | Aluminum A5052 | 42.9 | Pressure-sensitive adhesive |
| Ex. 3 | □700mm | 0.28mm | PET | Ag | Acryl ic resin | □500mm | FIG. 7(A) | 0° | 9mm | Aluminum A5052 | 32.1 | Pressure-sensitive adhesive |
| Ex. 4 | □700mm | 0.21mm | PET | TiO₂: 8 layers SiO₂: 7 layers | Acryl ic resin | □500mm | FIG. 7(A) | 0° | 9mm | Stainless steel SUS304 | 42.9 | Pressure-sensitive adhesive |
| Ex. 5 | □ 700mm | 0.21mm | PET | Ag | Acrylic resin | □500mm | FIG. 7(A) | 0° | 9mm | Aluminum A5052 | 42.9 | Pressure-sensitive adhesive |
| Ex. 6 | □700mm | 0.11mm | PET | Ag | Acrylic resin | □500mm | FIG. 7(B) | 0° | 18mm | Aluminum A5052 | 163.6 | Pressure-sensitive adhesive |
| Ex. 7 | □700mm | 0. 21mm | PET | Ag | Acrylic resin | □500mm | FIG. 7(B) | 0° | 18mm | Aluminum A5052 | 85.7 | Pressure-sensitive adhesive |
| Ex. 8 | □700mm | 0.28mm | PET | Ag | Acryl ic resin | □500mm | FIG. 7(B) | 0° | 18mm | Aluminum A5052 | 64.3 | Pressure-sensitive adhesive |

**[Table 2]**

| Table 1 (2/3) | | | | | | | | | | | | |
|---|---|---|---|---|---|---|---|---|---|---|---|---|
| | Film mirror configuration | | | | | Support member configuration | | | | | Others | |
| | Size | Film thickness | Resin substrate | Reflective layer | Surface covering layer | Size | Perpendicular cross-sectional shape | Exit angle | Radius of curvature | Material | Ratio (radius of curvature/ film thickness) | Bonding between film mirror and support member |
| Ex. 9 | □700mm | 0.11mm | PET | Ag | Acrylic resin | □500mm | FIG. 7(C) | 0° | 28mm | Aluminum A5052 | 254.5 | Pressure-sensitive adhesive |
| Ex. 10 | □700mm | 0. 21mm | PET | Ag | Acrylic resin | □500mm | FIG. 7(C) | 0° | 28mm | Aluminum A5052 | 133.3 | Pressure-sensitive adhesive |
| Ex. 11 | □700mm | 0. 28mm | PET | Ag | Acrylic resin | □500mm | FIG. 7(C) | 0° | 28mm | Aluminum A5052 | 100 | Pressure-sensitive adhesive |
| Ex. 12 | □700mm | 0.21mm | PET | Ag | Acrylic resin | D500mm | FIG. 7(D) | 10° | 18mm | Aluminum A5052 | 85.7 | Pressure-sensitive adhesive |
| Ex. 13 | □700mm | 0.21mm | PET | Ag | Acrylic resin | □500mm | FIG. 7(E) | 17° | 18mm | Aluminum A5052 | 85.7 | Pressure-sensitive adhesive |
| Ex. 14 | □700mm | 0.21mm | PET | Ag | Acrylic resin | □500mm | FIG. 7(F) | 30° | 18mm | Aluminum A5052 | 85.7 | Pressure-sensitive adhesive |
| Comp. ex. 1 | □700mm | 0.41mm | PET | Ag | Acryl ic resin | □500mm | FIG. 7(A) | 0° | 9mm | Aluminum A5052 | 22 | Pressure-sensitive adhesive |
| Comp. ex. 2 | □700mm | 0.21mm | PET | Ag | Acrylic resin | □500mm | FIG. 7(A) | 0° | 6mm | Aluminum A5052 | 31 | Pressure-sensitive adhesive |
| Comp. ex. 3 | □700mm | 0.21mm | PET | Ag | Acryl ic resin | None | | | | | - | - |

**[Table 3]**

| Table 1 (3/3) | | | | | | |
|---|---|---|---|---|---|---|
| | Evaluation result | | | | | |
| | Amount of warpage | | Specular reflectivity (Diffuse component ratio) | | Light-collecting characteristics | resistance (Temperature cycle properties) |
| Ex. 1 | 18 | A A | 0.025 | A | A | B |
| Ex. 2 | 55 | A | 0.024 | A | B | B |
| Ex. 3 | 94 | B | 0.025 | A | B | B |
| Ex. 4 | 25 | A | 0.025 | A | A | B |
| Ex. 5 | 23 | A | 0.024 | A | A A | B |
| Ex. 6 | 13 | A A | 0.022 | A | A A | B |
| Ex. 7 | 24 | A | 0.017 | A A | A A | A |
| Ex. 8 | 62 | A | 0.021 | A | A | B |
| Ex. 9 | 10 | A A | 0.019 | A A | A A | B |
| Ex. 10 | 17 | A A | 0.015 | A A | A A | A |
| Ex. 11 | 28 | A | 0.017 | A A | A | A |
| Ex. 12 | 25 | A | 0.018 | A A | A A | A A |
| Ex. 13 | 26 | A | 0.018 | A A | A A | A A |
| Ex. 14 | 70 | A | 0.027 | A | B | A A |
| Comp. ex. 1 | 185 | C | 0.067 | B | C | C |
| Comp. ex. 2 | 140 | - | 0.055 | B | C | C |
| Comp. ex. 3 | 220 | - | 0.128 | C | C | D |

From the results shown in Table 1, it was revealed that the reflecting mirror in which the film mirror was directly bonded to the mounting body without using a support member was inferior in heat resistance, and in specular reflectivity and light-collecting characteristics as well (Comparative Example 3).

The reflecting mirror in which the film thickness of the film mirror was larger than 0.30 mm showed inferior heat resistance, a large amount of warpage of the film mirror, and inferior specular reflectivity and light-collecting characteristics (Comparative Example 1).

Even when a film mirror having the prescribed film thickness was used, the reflecting mirror in which the support member had a small radius of curvature showed inferior heat resistance, a large amount of warpage of the film mirror, and inferior specular reflectivity and light-collecting characteristics (Comparative Example 2).

In contrast, the reflecting mirrors, each of which included a film mirror having the prescribed thickness and a support member having a curved face of a specified radius of curvature in a prescribed position, showed excellent heat resistance, a small amount of warpage of the film mirror, and excellent specular reflectivity and light-collecting characteristics (Examples 1 to 14).

In particular, Examples 1, 6, 7, and 9 to 14, in which the ratio between the radius of curvature of the curved face of the support member and the film thickness of the film mirror (radius of curvature/film thickness) was not less than 80, had a smaller amount of warpage of the film mirror and better light-collecting characteristics of the reflecting mirror.

Similarly, Examples 6 to 14, in which the radius of curvature of the curved face of the support member was not less than 15 mm, had a smaller amount of warpage of the film mirror and better light-collecting characteristics of the reflecting mirror.

### REFERENCE SIGNS LIST

- 1: Reflecting mirror
- 2: Film mirror
- 3: Support member
- 3a: Opening face
- 3b: Curved face
- 5: Exit point
- 10: Film mirror
- 20: Light-receiving plate
- 11: Resin substrate
- 12: Metallic reflective layer
- 13: Surface covering layer
- 100: Film mirror
- 101: First surface covering layer
- 102: First metallic reflective layer
- 103: Resin substrate
- 104: Second metallic reflective layer
- 105: Second surface covering layer
- 106: First resin substrate
- 107: Metallic reflective layer
- 108: Second resin substrate

## Claims

1. A reflecting mirror for solar radiation collection, comprising a film mirror (2) and a frame-shaped support member (3) adapted to support a peripheral edge of the film mirror (2), wherein mm; the support member (3) is in contact with the film mirror (2) and has a curved face (3b) which is convexed outward in a horizontal direction with respect to an opening face (3a) of the support member (3); and
**characterised in that** the film mirror (2) has a film thickness of 0.10 to 0.30 mm; and the curved face (3b) has a radius of curvature between 15 mm and 30 mm.

2. The reflecting mirror for solar radiation collection according to claim 1, wherein a ratio of the radius of curvature of the curved face (3b) of the support member (3) to the film thickness of the film mirror (2) (radius of curvature/film thickness) is not less than 80.

3. The reflecting mirror for solar radiation collection according to claim 1 or 2, wherein an angle formed by a tangent to the support member (3) and the opening face (3a) of the support member (3) at a point in a cross section perpendicular to the opening face (3a) of the support member (3), at which point the film mirror (2) and the support member (3) separate from each other, is 0° or larger but up to 20°.

4. The reflecting mirror for solar radiation collection according to any one of claims 1 to 3, wherein the film mirror (2) is a polygonal film mirror having a resin substrate (11), a metallic reflective layer (12), and a surface covering layer (13).

5. The reflecting mirror for solar radiation collection according to any one of claims 1 to 4, wherein the film mirror (2) has a rectangular shape.

6. The reflecting mirror for solar radiation collection according to any one of claims 1 to 5, wherein the film mirror (2) has a first surface covering layer (101), a first metallic reflective layer (102), a resin substrate (103), a second metallic reflective layer (104) and a second surface covering layer (105) in this order.

7. The reflecting mirror for solar radiation collection according to any one of claims 1 to 5, wherein the film mirror (2) has a first surface covering layer (101), a first resin substrate (106), a metallic reflective layer (12), a second resin substrate (108) and a second surface covering layer (105) in this order.

## Patentansprüche

1. Reflektierender Spiegel zum Sammeln von Sonnenstrahlung, umfassend einen Filmspiegel (2) und ein rahmenförmiges Stützelement (3), das zum Tragen einer Umfangskante des Filmspiegels (2) ausgelegt ist, wobei
das Stützelement (3) mit dem Filmspiegel (2) in Kontakt steht und eine gekrümmte Fläche (3b) hat, die in horizontaler Richtung in Bezug auf eine Öffnungsfläche (3a) des Stützelements (3) nach außen gewölbt ist; und
**dadurch gekennzeichnet, dass** der Filmspiegel (2) eine Filmdicke von 0,10 bis 0,30 nm hat; und
die gekrümmte Fläche (3b) einen Krümmungsradius zwischen 15 mm und 30 mm hat.

2. Reflektierender Spiegel zum Sammeln von Sonnenstrahlung nach Anspruch 1, wobei ein Verhältnis des Krümmungsradius der gekrümmten Fläche (3b) des Stützelements (3) zu der Filmdicke des Filmspiegels (2) (Krümmungsradius/Filmdicke) nicht weniger als 80 beträgt.

3. Reflektierender Spiegel zum Sammeln von Sonnenstrahlung nach Anspruch 1 oder 2, wobei ein Winkel, der durch eine Tangente an dem Stützelement (3) und der Öffnungsfläche (3a) des Stützelements (3) an einem Punkt in einem Querschnitt senkrecht zu der Öffnungsfläche (3a) des Stützelements (3) gebildet wird, an welchem Punkt sich der Filmspiegel (2) und das Stützelement (3) voneinander trennen, 0° oder mehr, jedoch bis zu 20°, beträgt.

4. Reflektierender Spiegel zum Sammeln von Sonnenstrahlung nach einem der Ansprüche 1 bis 3, wobei der Filmspiegel (2) ein Polygonfilmspiegel ist, der ein Harzsubstrat (11), eine metallische reflektierende Schicht (12) und eine Oberflächendeckschicht (13) hat.

5. Reflektierender Spiegel zum Sammeln von Sonnenstrahlung nach einem der Ansprüche 1 bis 4, wobei der Filmspiegel (2) eine rechteckige Form hat.

6. Reflektierender Spiegel zum Sammeln von Sonnenstrahlung nach einem der Ansprüche 1 bis 5, wobei der Filmspiegel (2) eine erste Oberflächendeckschicht (101), eine erste metallische reflektierende Schicht (102), ein Harzsubstrat (103), eine zweite metallische reflektierende Schicht (104) und eine zweite Oberflächendeckschicht (105) in dieser Reihenfolge hat.

7. Reflektierender Spiegel zum Sammeln von Sonnenstrahlung nach einem der Ansprüche 1 bis 5, wobei der Filmspiegel (2) eine erste Oberflächendeckschicht (101), ein erstes Harzsubstrat (106), eine metallische reflektierende Schicht (12), ein zweites Harzsubstrat (108) und eine zweite Oberflächendeckschicht (105) in dieser Reihenfolge hat.

## Revendications

1. Miroir réfléchissant pour la collecte de rayonnement solaire, comprenant un miroir à films (2) et un élément de support en forme de cadre (3) adapté à servir de support à un bord périphérique du miroir à films (2), dans lequel
l'élément de support (3) est en contact avec le miroir à films (2} et présente une face incurvée (3b) qui est convexe vers l'extérieur dans une direction horizontale par rapport à une face d'ouverture (3a) de l'élément de support (3) ; et
**caractérisé en ce que** le miroir à films (2) a une épaisseur de film de 0,10 à 0,30 mm ; et
la face incurvée (3b) a un rayon de courbure entre 15 mm et 30 mm.

2. Miroir réfléchissant pour la collecte de rayonnement solaire selon la revendication 1, dans lequel un rapport entre le rayon de courbure de la face incurvée (3b) de l'élément de support (3) et l'épaisseur du miroir à films (2) (rayon de courbure/épaisseur de film) n'est pas inférieur à 80.

3. Miroir réfléchissant pour la collecte de rayonnement solaire selon la revendication 1 ou 2, dans lequel un angle formé par une tangente à l'élément de support (3) et la face d'ouverture (3a) de l'élément de support (3) en un point en coupe transversale perpendiculaire à la face d'ouverture (3a) de l'élément de support (3), au niveau duquel point le miroir à films (2) et l'élément de support (3) se sépare l'un de l'autre, est de 0° ou plus mais que jusqu'à 20°.

4. Miroir réfléchissant pour la collecte de rayonnement solaire selon l'une quelconque des revendications 1 à 3, dans lequel le miroir à films (2) est un miroir à films polygonal ayant un substrat en résine (11), une couche réfléchissante métallique (12), et une couche de revêtement de surface (13).

5. Miroir réfléchissant pour la collecte de rayonnement solaire selon l'une quelconque des revendications 1 à 4, dans lequel le miroir à films (2) a une forme rectangulaire.

6. Miroir réfléchissant pour la collecte de rayonnement solaire selon l'une quelconque des revendications 1 à 5, dans lequel le miroir à films (2) présente une première couche de revêtement de surface (101), une première couche réfléchissante métallique (102), un substrat en résine (103), une seconde couche réfléchissante métallique (104) et une seconde couche de revêtement de surface (105) dans cet ordre.

7. Miroir réfléchissant pour la collecte de rayonnement solaire selon l'une quelconque des revendications 1 à 5, dans lequel le miroir à films (2) a une première couche de revêtement de surface (101), un premier substrat en résine (106), une couche réfléchissante métallique (12), un second substrat en résine (108) et une seconde couche de revêtement de surface (105) dans cet ordre.
